## Europäisches Patentamt

## European Patent Office

## Office européen des brevets

(19)

(11) Veröffentlichungsnummer: **0 020 878**
**A1**

(12) **EUROPÄISCHE PATENTANMELDUNG**

(21) Anmeldenummer: **80101678.3**

(22) Anmeldetag: **28.03.80**

(51) Int. Cl.³: **H 04 M 11/06,** H 04 B 9/00, H 04 N 7/00, H 04 Q 11/04, H 04 H 1/08

(30) Priorität: **01.06.79 DE 2922418**

(43) Veröffentlichungstag der Anmeldung: **07.01.81** **Patentblatt 81/1**

(84) Benannte Vertragsstaaten: **AT CH FR GB IT NL SE**

(71) Anmelder: **Licentia Patent-Verwaltungs-GmbH, Theodor-Stern-Kai 1, D-6000 Frankfurt/Main 70 (DE)**

(72) Erfinder: **Schüssler, Hans, Dr. Ing., Grösseweg 67/1, D-7150 Backnang (DE)**

(74) Vertreter: **Schickle, Gerhard, Dipl.-Ing., Licentia Patent-Verwaltungs-GmbH Theodor-Stern-Kai 1, D-6000 Frankfurt/Main 70 (DE)**

(54) Dienstintegriertes Nachrichtenübertragungs- und Vermittlungssystem für Ton, Bild und Daten.

(57)   Dienstintegriertes Nachrichtenübertragungs- und Vermittlungssystem für Ton, Bild und Daten (entsprechend P 29 22 418.8).

Für Verbindungsleitungen zwischen Kontentratoren und Ortsamt bzw. Teilnehmeranschlussleitungen werden Lichtleitfasersysteme vorgeschlagen, die im Wellenmultiplex-Duplex-Betrieb ausgenutzt werden. Dabei sollen Schmal- bzw. Breitbanddienste digital bzw. analog übertragen und im Zeit- bzw. Raumvielfach vermittelt werden.

EP 0 020 878 A1

- 1 -

Licentia Patent-Verwaltungs-GmbH
Theodor-Stern-Kai 1
D-6000 Frankfurt 70

NE2-BK/Ruf/jo
BK 78/74

## Dienstintegriertes Nachrichtenübertragungs- und Vermittlungssystem für Ton, Bild und Daten

Die Erfindung betrifft ein dienstintegriertes Nachrichtenübertragungs- und Vermittlungssystem für Ton, Bild und Daten.

Ein solches Nachrichtensystem ist bekannt geworden durch die DE-OS 25 38 638, bei dem zu jedem an das Nachrichtensystem angeschlossenen Fernsprechteilnehmer von der zugehörigen zentralen Vermittlungsstelle aus zwei gesonderte Glasfasern gezogen werden, die beide im Zeitmultiplexverfahren Fernsprech- und Videosignale bzw. anstelle der Fernsprechsignale Datensignale übertragen und wobei die eine Faser als Sendefaser und die andere Faser als Empfangsfaser benutzt wird und bei dem Videokoppelfelder in der Fernsprechzentrale für Bildkommunikation und/oder zur Vermittlung von Fernsehsignalen vorgesehen sind.

Dieses integrierte Nachrichtensystem benötigt jedoch einen relativ großen Aufwand für seine Realisierung.

Aufgabe der Erfindung war es daher, ein Nachrichtensystem anzugeben, das mit wesentlich weniger Aufwand, insbesondere bei der Einführung neuer Dienste ohne aufwendige Neuinstallationen, auskommt, eine Netzstruktur aufweist, die Ausbaumöglichkeiten für zu vermittelnde Breitbanddienste bietet und die Nutzung neuer technologischer Verfahren für Halbleiterschaltungen und Lichtleiterübertragungsstrecken ermöglicht.

Die Lösung erfolgt mit den in den Patentansprüchen angegebenen Mitteln.

Das erfindungsgemäße Nachrichtensystem bietet die Vorteile der geringeren Investitionskosten durch Einsparungen bei den Teilnehmeranschlußleitungen, der geringeren Betriebs- und Wartungskosten und der gleichzeitigen Nutzung aller Dienste für jeden Teilnehmer. Außerdem kann eine integrierte Übertragungs- und Vermittlungstechnik eingesetzt werden, und eine stufenweise Erweiterung der Dienste wird ermöglicht.

Es folgt nun die Beschreibung der Erfindung anhand der Figuren.

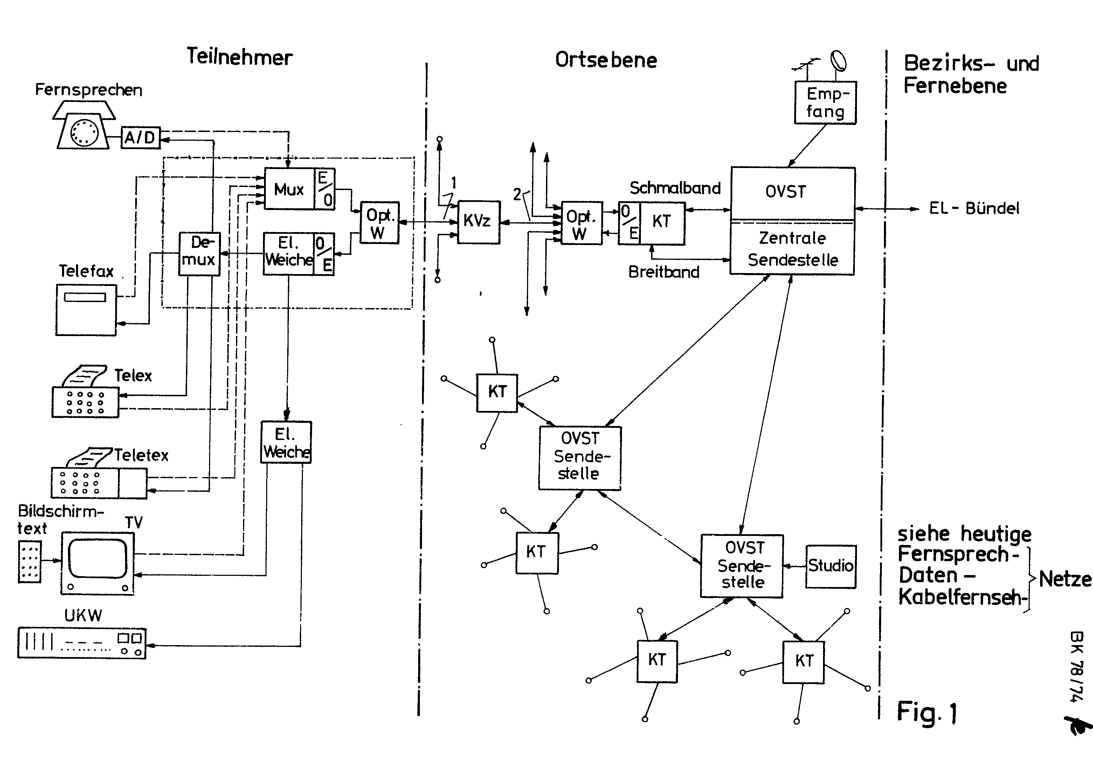

In Fig. 1 ist ein Ausführungsbeispiel des erfindungsgemässen dienstintegrierten Nachrichtensystems dargestellt, wobei in die drei Bereiche Teilnehmer, Ortsebene und Bezirks- und Fernebene unterteilt wurde. Beim Teilnehmer, der die neuen Schmalbanddienste wie Telefax, Telex, Teletex, Bildschirmtext und Standbildübertragung angeboten bekommt, werden die schon in Digitalform anfallenden Informationen der Endgeräte zusammen mit dem digitalisierten Sprachkanal und der Signalisierung des Fernsprechers sowie einem Steuerinformationskanal in einem
Multiplexer Mux zu einem digitalen Datenstrom gebündelt.
Der gesamte Bitstrom des Multiplexers wird einem elektrooptischen Wandler E/O zugeführt und über eine Gabel-
oder Weichenschaltung in die nur eine Lichtleitfaser
aufweisende Teilnehmerleitung 1 eingekoppelt. In einer
Kabelverzweigung KVz werden mehrere Teilnehmerleitungen
1 zu Lichtleitkabeln 2 zusammengefaßt und an einen Konzentrator KT über eine optische Weiche herangeführt, wobei am teilnehmerseitigen Eingang eine optisch-elektrische Wandlung stattfindet. Der Konzentrator KT ist mit
einer Sendestelle oder mit einer zentralen Sendestelle
der Ortsvermittlungsstelle OVSt verbunden. Die Ortsvermittlungsstelle OVSt ist in der üblichen Weise über EL-
Bündel an die Bezirks- und Fernebene des Fernsprechnetzes
und/oder für Datenverbindungen an Datennetze und/oder
für Breitbanddienste an Breitbandnetze, beispielsweise
Kabelfernsehnetze angeschlossen.

In der Rückrichtung gelangen die Informationen über End-
bzw. Ortsvermittlungsstelle, Konzentrator, elektro-optischer Wandler und optische Weiche auf das Lichtleitkabel
2, das sich an der Kabelverzweigungsstelle KVz in die
aus einer Lichtleitfaser bestehenden Teilnehmeranschlußleitung 1 teilt. Nach Durchlauf der optischen Gabel-
oder Weichenschaltung werden die optischen Signale in
elektrische gewandelt. Selbstverständlich können diese
Funktionen auch von einem geeigneten kombinierten elektrooptischen, optoelektrischen Wandler erfüllt werden.
In einer elektrischen Weiche werden Fernseh- und Rundfunksignale von dem Digitalsignal der Schmalbanddienste
abgetrennt und direkt den entsprechenden Endgeräten zugeführt. Durch Demultiplexer Demux werden die Informationen für die einzelnen Schmalbanddienste getrennt und
den jeweiligen Endgeräten zugeführt. Für das Sprachsignal wird noch eine Digital-Analogwandlung DA vor oder in dem Fernsprecher erforderlich.

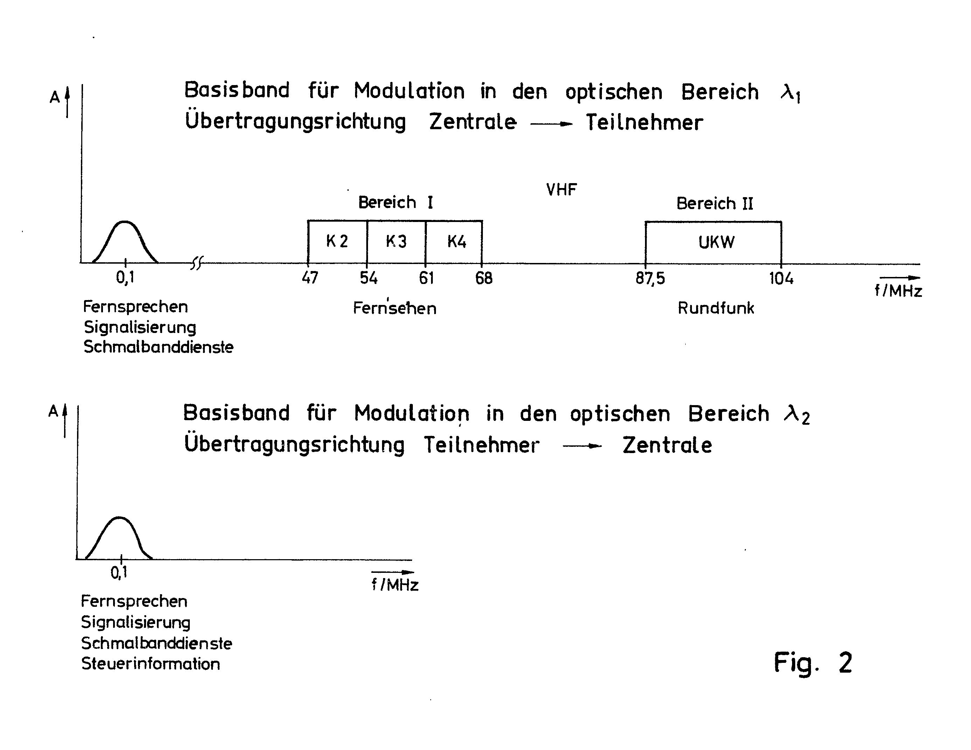

In Fig. 2 ist eine mögliche Modulationsaufteilung für die Übertragung auf einer optischen Teilnehmeranschlußleitung gemäß der Erfindung dargestellt. Der Zweiwegebetrieb auf einer Lichtleitfaser wird dadurch erreicht, daß man Sender- und Empfangselemente unterschiedlicher Frequenz für die beiden Richtungen und damit einen Mehrwellenbetrieb realisiert. Der Übertragungsrichtung zum Teilnehmer ist ein optischer Bereich $\lambda 1$ und der Übertragungsrichtung zur Zentrale ein optischer Bereich $\lambda 2$ zugeordnet. In beiden Übertragungsrichtungen enthält das Basisband im unteren Bereich bis etwa 0,2 MHz die Schmalbanddienste, Fernsprechen und Signalisierung sowie einen Steuerinformationskanal in der Rückrichtung vom Teilnehmer zur Zentrale zur Auswahl beispielsweise bestimmter KTV-Fernsehkanäle, die im VHF-Bereich I zu empfangen sind. Weiterhin enthält das Basisband des Bereichs $\lambda 1$ das UKW-Rundfunkband Bereich II. Selbstverständlich ist ein weiterer Ausbau der Fernseh-Rundfunkbereiche III bis V mit Bewegtbildübertragung, Telekonferenz usw. möglich. Auch die Rückrichtung kann zusätzlich einen Breitbandvideokanal (Zweiweg-KTV) enthalten. Die Modulationsart der Breitbandsysteme entspricht derjenigen bei Funkempfang, während für die Übertragung von Sprache, Signalisierung und der neuen Schmalbanddienste Digitalkanäle von beispielsweise je 64 kbit/s vorgesehen sind. Aus Qualitätsgründen ist für Fernsehen unter Umständen eine getrennte Bild- und Tonübertragung vorzuziehen.

Selbstverständlich können die Schmalbandsignale auch anders als nach Fig. 2 geträgert werden, beispielsweise so, daß das Videoband für die Bildübertragung freigehalten wird.

Zwischen Kabelverzweiger und digitaler Fernsprechvermittlung sind gegebenenfalls Konzentratoren vorgesehen, in denen die Steuerinformation des Rückkanals abgetrennt und einer Steuereinrichtung zur Auswertung zugeführt werden, während die Breitband-Verteilsignale mit Hilfe eines Raummultiplex-Breitbandkoppelfeldes auf die einzelnen Teilnehmeranschlüsse aufgeschaltet werden. Durch Fortschritte in der Halbleitertechnologie sind für solche Koppelfelder in Zukunft auch monolithische Lösungen denkbar.

Ebenfalls im Konzentrator wird die Signalisierung von den Digitalsignalen für die Sprachübertragung bzw. für die neuen Dienste abgetrennt.

Da bereits im Konzentrator PCM 30-Fernsprechsysteme gebildet werden, besteht die Möglichkeit, einen Teil der Vermittlungsfunktionen bereits im Konzentrator durchzuführen.

Je nach Durchdringungsgrad der neuen Dienste ist es auch zweckmäßig, einzelne Dienste zu unterschiedlichen Übertragungssystemen zusammenzufassen.

In manchen Fällen bietet sich auch eine zweite Konzentratorstufe an. Für die Strecken zwischen Konzentrator und Vermittlungsstelle bzw. zwischen den Konzentratoren, sowie für die Ortsverbindungsstrecken sind erfindungsgemäß ebenfalls Lichtleitsysteme vorteilhaft einsetzbar. Digitale Lichtleitersysteme für 8, 34 und 140 Mbit/s können auf den gleichen Kabeln betrieben werden und erlauben eine flexible Anpassung an den Bedarf. Dabei kann erwartet werden, daß alle Strecken ohne Zwischenverstärker realisiert werden können. Für die Endleitungen als Verbindung des Ortsnetzes nach außen hin können ebenfalls die vorher genannten Systeme angewendet werden, wobei aber die Streckendämpfung und die Dispersion in Systemen mit einer Gradientenfaser und 860 nm-Lichtwellenlänge den Repeatereinsatz notwendig machen.

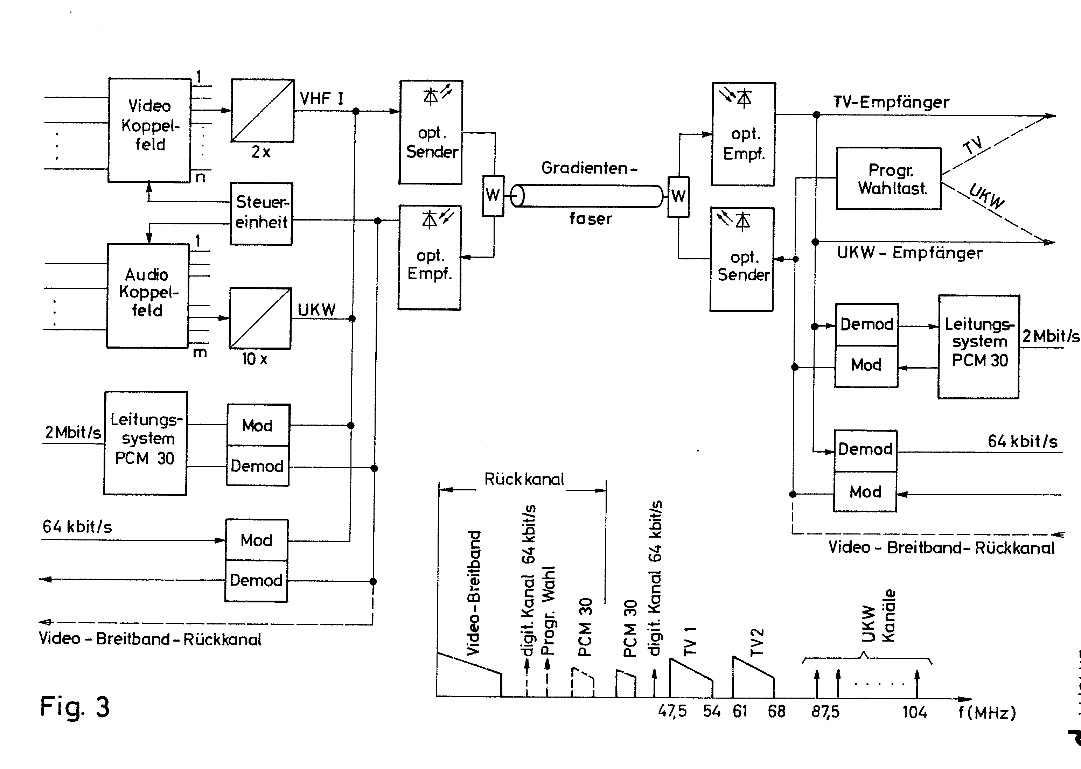

Die Fig. 3 zeigt ein weiteres Ausführungsbeispiel des erfindungsgemäßen Nachrichtensystems, bei dem der Teilnehmer (rechte Hälfte) über eine Lichtleitfaser (in der Mitte) an eine zentrale Vermittlungsstelle (linke Hälfte) angeschlossen ist. Dieses System, bei dem vorteilhafterweise Lasersender hoher Linearität und Gradientenfasern niederer Dispersion verwendet werden, ist ausgelegt für die Übertragung von zwei TV- und zehn UKW-Programmen in Vorwärtsrichtung, einem 64 kbit/s Digitalkanal, einem System PCM 30 in beiden Richtungen und außerdem bedarfsweise für einen breitbandigen Videorückkanal mit einem digitalen Schmalbandkanal zur Programmwahl. Diese Kanalaufteilung ist in der unteren Hälfte der Fig. 3 dargestellt.

Ein solches Kommunikationsnetz entspricht vorzüglich den Belangen auch von innerbetrieblichen Informationsaustauschformen oder ist vorteilhafterweise geeignet für die Ausrüstung von Vortrags- oder Diskussionssälen von Lehranstalten bzw. Kongreßzentren.

0020878

- 1 -

Licentia Patent-Verwaltungs-GmbH      NE2-BK/Ruf/jo
Theodor-Stern-Kai 1      BK 78/74
D-6000 Frankfurt 70

Patentansprüche

1. Dienstintegriertes Nachrichtenübertragungs- und Vermittlungssystem für Ton, Bild und Daten <u>gekennzeich-
net durch</u> Kombinationen der beiden ersten mit den folgenden Merkmalen:

    1. Die Teilnehmeranschlußleitung enthält höchstens
ein Lichtleitfasersystem (1),

    2. die Lichtleitfaser wird im Wellenmultiplex-Duplex-
Betrieb ausgenutzt,

    3. die Schmalbanddienste erfolgen mittels digitaler
Übertragung, wobei Analog-Digital (AD)- bzw. Digital-Analog (DA)-Wandlung und Multiplexbildung
(Mux, Demux) beim Teilnehmer erfolgen,

    4. die Breitbanddienste erfolgen mittels analoger
Übertragung,

    5. Einsatz eines Vorfeld-Konzentrators (KT) mit Multiplex-Funktionen für die Schmalbanddienste und
Vermittlungsfunktionen für die Breitbanddienste,

0020878

6. Einsatz von Lichtleitersystemen für die Verbindungsleitung Konzentrator — Vermittlungsstelle, beispielsweise Ortsamt, bzw. Konzentrator — Konzentrator bzw. zwischen den Vermittlungsstellen,

7. Vermittlung der Schmalbanddienste im Zeitvielfach,

8. Vermittlung der Breitbanddienste im Raumvielfach.

2. Nachrichtensystem nach Anspruch 1, gekennzeichnet durch eine Gradientenfaser.

3. Nachrichtensystem nach Anspruch 1 oder 2, dadurch gekennzeichnet, daß für die Vermittlung der Breitbanddienste Halbleiterkoppelelemente eingesetzt werden.

4. Nachrichtensystem nach Anspruch 1, 2 oder 3, gekennzeichnet durch die Bereitstellung von Rundfunkkanälen in den Bereichen I, II und/oder III und/oder IV/V, in einem ersten optischen Bereich $\lambda 1$ für die Übertragung von einer zentralen Sendestelle zum Teilnehmer und eines Steuerinformationskanals in einem zweiten optischen Bereich $\lambda 2$ für die Übertragung vom Teilnehmer zur zentralen Sendestelle sowie eines Fernsprechkanals, eines Signalisierungskanals und/oder von Schmalbandkanälen für Telex, Telefax, Teletex, Bildschirmtext usw. in beiden Übertragungsrichtungen (Fig. 2).

5. Nachrichtensystem nach Anspruch 4, gekennzeichnet durch die zusätzliche Bereitstellung von mindestens einem Videokanal im zweiten optischen Bereich $\lambda 2$.

6. Nachrichtensystem nach Anspruch 5, dadurch gekennzeichnet, daß der Videokanal hochauflösend ist.

7. Nachrichtensystem nach Anspruch 4, 5 oder 6, gekennzeichnet durch die Bereitstellung mindestens eines PCM-Kanals in beiden Übertragungsrichtungen.

8. Nachrichtensystem nach einem der vorhergehenden Ansprüche, gekennzeichnet durch die Anschlußmöglichkeit für
konventionelle und/oder standardisierte Endgeräte.

--------------

0020878

BK 78/74

Fig. 1

Basisband für Modulation in den optischen Bereich $\lambda_1$
Übertragungsrichtung Zentrale —→ Teilnehmer

VHF

Bereich I

Bereich II

| K 2 | K 3 | K4 |

UKW

0,1   47   54   61   68   87,5   104   f/MHz

Fernsprechen
Signalisierung
Schmalbanddienste

Fernsehen

Rundfunk

Basisband für Modulation in den optischen Bereich $\lambda_2$
Übertragungsrichtung Teilnehmer —→ Zentrale

0,1   f/MHz

Fernsprechen
Signalisierung
Schmalbanddienste
Steuerinformation

Fig. 2

0020878
BK 78/74

Fig. 3

0020878
BK 78/74

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | NACHRICHTENTECHNISCHE ZEITSCHRIFT, Band 32, Heft 3, März 1979, Berlin, DE H. BAUCH: "Künftige Kommunikationstechnik mit Lichtleitern", Seiten 150 bis 153.  * Seite 152, linke Spalte, Zeilen 31-39; Zeile 49 bis mittlere Spalte, Zeile 5; rechte Spalte, Zeile 40 bis Seite 153, mittlere Spalte, Zeile 22 *  -- | 1,4,5, 7 |
| | OPTICS LETTERS, Band 1, Heft 3, September 1977, New York, KAWASAKI et al. "Full duplex transmission link over single-strand optical fiber", Seiten 107und 108.  * Gesamtes Artikel *  -- | 1,2,4, 5 |
| | IEEE TRANSACTIONS ON COMMUNICATIONS Band COM 26, Heft 7, Juli 1978, New York, USA MIKI et al: "Viabilities of the wavelength-division-multiplexing transmission system over an optical fiber cable", Seiten 1082 bis 1087.  * Seite 1083, Bild 3b; Seiten 1084 und 1085, Absatz 2; Seite 1086, linke Spalte, Zeile 19 bis rechte Spalte, Zeile 30 *  -- | 1,4,5 |
| D | DE - A - 2 538 638 (FORDERUNGS-GEMEINSCHAFT DES H H.I.)  * Seite 5, Zeile 32 bis Seite 6, | 1,3 |

**KLASSIFIKATION DER ANMELDUNG (Int.Cl.³)**

H 04 M 11/06
H 04 B 9/00
H 04 N 7/00
H 04 Q 11/04
H 04 H 1/08

**RECHERCHIERTE SACHGEBIETE (Int. Cl.³)**

H 04 Q 11/04
H 04 N 7/00
H 04 M 11/06
H 04 B 9/00
H 04 H 1/08
H 04 H 1/00

**KATEGORIE DER GENANNTEN DOKUMENTE**

X: von besonderer Bedeutung
A: technologischer Hintergrund
O: nichtschriftiiche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie. übereinstimmendes Dokument

Der vorliegende Recherchenbericht wurde für alle Patentansprüche erstellt.

| Recherchenort Den Haag | Abschlußdatum der Recherche 29-08-1980 | Prüfer DE MUYT |
|---|---|---|

EPA form 1503.1 06.78

Europäisches
Patentamt

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |

Zeile 3; Zeilen 24-29 *

-- --

IEEE TRANSACTIONS ON COMMUNICATIONS     1,4-6
Band COM-23, Heft 1, Januar 1975,
New York, USA
HARE et al. "Multipurpose wideband local distribution- proposals
for an integrated system",
Seiten 42 bis 48.

   * Seite 45, rechte Spalte,
    Bild 2 *

RECHERCHIERTE SACHGEBIETE (Int. Cl. ³)

-- --

IEEE TRANSACTIONS ON COMMUNICATIONS     1,4-7
Band COM-23, Heft 1, Januar 1975,
New York, USA
COYNE: "An integrated broadband distribution system using
demand assignment", Seiten
55 bis 63.

   * Seiten 58-61, Absatz VI *

-- --

IEEE TRANSACTIONS ON COMMUNICATIONS     3,6
Band COM-22, Heft 9, September
1974,
New York USA
BACHLE et al. "Fully electronic
space-division telephone exchanges
using semiconductor crosspoints
and optical switching",
Seiten 1286 bis 1291.

   * Seiten 1289 und 1290,
    Absatz III *

-- --

P    ICC '79 CONFERENCE RECORD, Band 2,
    Juni 1979,
                            ./.

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | Boston, USA<br>CHOUINARD et al. "Description and performance review of the York-ville integrated services fiber optic trial". Seiten 28.3.1 bis 28.3.8.<br><br>* Seite 28.3.2, rechte Spalte, letzter Absatz, Seite 28.3.3, linke Spalte, Zeile 1, bis Seite 28.3.4, linke Spalte, Zeile 15; rechte Spalte * | | |
| A | NACHRICHTEN TECHNISCHE ZEITSCHRIFT, Band 29, Heft 3, März 1976, Berlin, DE<br>KAISER "Zukünftige Telekommunikation in der Bundesrepublik Deutschland- Ergebnisse der KtK-Beratungen", Seiten 190-210.<br><br>* Seiten 204-210, Absätze 5,6 * | | RECHERCHIERTE SACHGEBIETE (Int. Cl. 3) |

EPA Form 1503.2   06.78